# EUROPÄISCHE PATENTSCHRIFT

(11) **EP 0 989 229 B1**
(45) Veröffentlichungstag und Bekanntmachung des Hinweises auf die Patenterteilung: **12.05.2004**
(21) Anmeldenummer: 98630053.1
(22) Anmeldetag: 22.09.1998
(51) Int. Cl.: D21C 9/08, D21C 5/02

(54) **Verfahren zur Eliminierung von klebrigen Verunreinigungen aus aufbereitetem Altpapier enthaltende Papierbreie mittels hydrophobierten Mineralien**
Process to eliminate stickies from paper pulp obtained from waste paper using hydrophobised minerals
Procédé pour l' élimination des contaminants collants d'une pâte à papier obtenue à partir de vieux papiers en utilisant des minéraux rendus hydrophobes

(43) Veröffentlichungstag der Anmeldung: 29.03.2000
(73) Patentinhaber: Pohlen, Alfred, 8315 Olm (LU); Kern, Gerhard, 7201 Neudörfl (AT); Dullinger, Heinz, 5323 Ebenau (AT)
(72) Erfinder: Pohlen, Alfred, 8315 Olm (LU)
(74) Vertreter: Waxweiler, Jean

(56) Entgegenhaltungen:
- EP-A- 0 622 490
- DE-A- 4 315 449
- US-A- 5 540 814
- DATABASE WPI Section Ch, Week 9445 Derwent Publications Ltd., London, GB; Class F09, AN 94-364156 XP002097056 & JP 06 287880 A (HONSHU PAPER MFG CO LTD) , 11. Oktober 1994

## Beschreibung

Die Erfindung betrifft ein Verfahren zur Eliminierung, bzw. Inhibierung von klebrigen Verunreinigungen, d.h. sogenannten Stickies, aus dem Papierstoff während des Aufbereitungsprozesses von Altpapier in der Papierindustrie, welcher neben Sortiereinrichtungen nach Größe (Siebtechnik). Form (Siebtechnik) und Dichte (Cleaner, Rohrschleudern, usw.), sowie Dispergier- und andere Einrichtungen auch ein oder mehrstufige Flotationsanlagen umfasst, bei welchen Druckfarbe sowie Schmutzpartikel über den Deinkingschaum ausgeschieden werden sollen.

Bei der Herstellung von Papier aus Altpapier kommt es durch den Altpapiereintrag zur Anwesenheit von klebrigen Verunreinigungen, sogenannten "Stickies". Unter dem Oberbegriff "Stickies" können u.a. Harz, Dispersionen für höherwertige Endprodukte, Hotmelts für Rückenverklebungen, aber auch Druckfarbenbindemittel als die bedeutendsten Stoffgruppen genannt werden. Stickies, also klebende Verunreinigungen, stellen in altpapierverarbeitenden Produktionen einen erheblichen Störfaktor dar und beeinflussen insbesondere die Runnability der Papiermaschine, sowie die Qualität des Endproduktes. Grundsätzlich unterscheidet man zwischen Mikro- und Makrostickies, wobei die Grenze dazwischen willkürlich bei 150 µm festgelegt wurde, da erst ab dieser Grenze eine mechanische Aussortierung der Stickies möglich ist. Die in den letzten Jahren vorangetriebene Verkleinerung der Schlitzweiten der Sortierkörbe bis zu 150 µm hatte eine deutlich verbesserte Aussortierung von Makrostickies zur Folge. Eine völlige Eliminierung von Makrostickies wurde jedoch trotz dieser Technologien noch nicht erreicht. Dies beweist, daß in den Kreisläufen vorhandene Mikrostickies durch ständige Schwankungen von Druck, Temperatur und pH, sowie durch mechanische Einwirkung nach der Aussortierung der Makrostickies wieder zu größeren Einheiten, also Makrostickies, agglomerieren. Die Eliminierung von Mikrostickies in der Altpapieraufbereitung stellt also beim derzeitigen Stand der Sortiertechnik das größte Potential in der Stickie-Bekämpfung dar.

Um diesem Problem der Mikrostickies Herr zu werden, wurden folgende Techniken vorgeschlagen:
- Fixierung des anionischen Teiles der Mikrostickies mittels eines hochkationischen synthetischen flüssigen Stoffes (Poly-DADMAC, PAC, Polyamine, usw.) an die Papierfaser und Austragung aus dem Papiermaschinenkreislauf. Mit dieser Technik werden Ablagerungen in der Trockenpartie der Papiermaschine, sowie die Ablagerungen auf den Kalanderwalzen kaum verringert. Auch gibt es potentielle negative Wechselwirkung mit anderen Papierhilfsmittel (Koazervationsbildung). Das Problem selbst wird mit dem nächsten Altpapierzyklus zurückgeführt, da Stickies im Endprodukt verbleiben.
- Adsorbierung ohne Austragung: Dosierung von Mineralstoffen im Bereich der Papiermaschine. Hiermit wird die Umhüllung bzw. Entklebung, kurz Inhibierung, von Makrostickies im Papiermaschinenkreislauf angestrebt. Damit wird aber der Füllstoffgehalt des Endproduktes erhöht und somit können die Festigkeitseigenschaften, sowie die optischen Eigenschaften des hergestellten Papieres verschlechtert werden. Auch hier wird das Problem mit dem nächsten Altpapierzyklus zurückgeführt, da die inhibierten Stickies im Endprodukt verbleiben.
- Zugabe von Polymeren mit jeweils einem hydrophoben und einem kationischen Ende: Diese Produkte werden im flüssigen Zustand dem Primärkreislauf der Papiermaschine selbst zugegeben. In der Praxis hat sich keinerlei Wirkung in der Trockenpartie bzw. auf die Kalanderwalzen gezeigt, d.h. die Ablagerungen in der Trockenpartie und an den Kalanderwalzen gingen kaum zurück. Das Problem wird auch hier mit dem nächsten Altpapierzyklus zurückgeführt, da Stickies im Endprodukt verbleiben.

All diese Vorschläge überspielen nur das tatsächliche Problem der Anwesenheit von Stickies. Auch zeigt dies, dass ein Handlungsbedarf zur Lösung der durch die im Papierbrei verbleibenden Stickies, insbesondere Mikrostickies, hervorgerufenen Probleme besteht.

Die Aufgabe der Erfindung ist ein Verfahren zu schaffen, mit dem, ausgehend vom geschilderten Stand der Technik, die durch Stickies, insbesondere Mikrostickies, hervorgerufenen Probleme zu beseitigen.

Beim erfindungsgemässen Verfahren wird diese Aufgabe dadurch gelöst, dass im Zuge der Aufbereitung des Altpapiers zur Herstellung eines Papierbreies, der einer Papiermaschine zugeführt wird, vor dem oder beim Einführen des Papierbreies in die Flotationsanlage diesem ein hydrophobiertes synthetisches oder natürliches Mineral zugesetzt wird, welches derart stark hydrophobiert ist, dass seine Dispergierung in klarem Wasser oder einer klassischen alkalischen oder neutralen faserfreien Deinkingformulierung unmöglich ist,
wobei die Mikrostickies vom zugesetzten hydrophobierten Mineral adsorbiert und von diesem über den Deinkingschaum aus der Flotationsanlage herausgetragen werden.

Um das Problem der Mikrostickies in wirklich spürbarem Umfang zu verringern, bedient sich die Erfindung eines synthetischen oder natürlichen Minerals (Zeolith, CaCO3, usw.), welches aufgrund einer Zusatzbehandlung einen sehr starken hydrophoben Charakter erhält. Die Art der Zusatzbehandlung ist nicht Teil der Erfindung, nur muß der hydrophobe Charakter des Minerals nach der Zusatzbehandlung so stark ausgeprägt sein, daß eine Dispergierung des Produktes in klarem Wasser oder in klassischen alkalischen oder neutralen Deinkingformulierungen ohne Papierstoff völlig unmöglich ist. Ein solches Produkt wird dann in einer Menge zwischen 0,5 und 25 kg pro Tonne Altpapier dem aufbereiteten Altpapier im Laufe der Herstellung eines Papierbreies vor einer Flotationseinheit zugegeben. Mikrostickies werden adsorbiert und mit dem Produkt über den Deinkingschaum aus der Flotationseinheit ausgetragen. Die bei der Zugabe solcher Produkte nach der Flotation bzw. vor der Papiermaschinenkreislauf bekannte Inhibierung von Stickies findet als Sekundäreffekt auch in der Flotationsanlage statt. Dieser Effekt konnte erstmalig an Hand von Rasterelektronenmikroskopaufnahmen von Stickies eines behandelten Papierstoffs nachgewiesen werden.

Der Wirkmechanismus dieser Produkte in den Flotationszellen steht in erster Linie in Zusammenhang mit Ihrem stark hydrophoben Charakter, welcher dazu führt, daß die einzelnen Partikel in wässrigem Milieu nach Kontakt mit ebenfalls hydrophoben Stoffen, also u.a. Stickies, streben. Der stark hydrophobe Charakter dieser Produkte garantiert, daß die mit Mikrostickies beladenen hydrophoben Partikel derselben sich an Luftblasen anlagern und an die Oberfläche transportiert werden.

Im Gegensatz zu den bisherigen Techniken, bei denen klassische Mineralstoffe (Bentonit, Talkum, usw.) mit dem alleinigen Ziel der Inhibierung (nicht Eliminierung) von Mikro- und Makrostickies eingesetzt werden, wird vielmehr ein zusätzlich hydrophobierter Stoff während bzw. vor dem Flotationsvorgang zur Eliminierung (nicht Inhibierung) der Mikrostickies über den Deinkingschlamm und zur Inhibierung von im Papierstoff verbleibenden, also nicht aussortierten Stickies, zugegeben. Die Flotationszelle selbst wird also erstmalig effizient genutzt, um Mikrostickies auszuscheiden und verbleibende Makrostickies zu inhibieren. Diese Vorgänge wurden meßtechnisch zweifelsfrei nachgewiesen.

Die Zugabe des hydrophobierten synthetischen oder natürlichen Minerals kann in Form einer faserhaltigen Aufschlämmung oder von Pulver durchgeführt werden.

Außerdem kann dem aus der Flotationsanlage kommende Papierbrei hydrophorbiertes synthetisches oder natürliches Mineral in Pulverform zur Inhibierung durch Adsorption der noch verbliebenen Mikro-oder Makrostickies zugesetzt werden.

Dadurch, daß die genannten Mikrostickies nicht inhibiert bzw. fixiert, sondern ausgetragen werden, ergeben sich folgende Vorteile:
- Durch die Ausscheidung von klebrigen Verunreinigungen vor der Papiermaschine wird nicht nur eine Wirkung in der Naßpartie der Papiermaschine, sondern auch in der Trockenpartie und nachfolgenden Glättwerken erzielt. Dieser Effekt ist deutlich stärker als bei klassischen anorganischen Inhibierungsstoffen.
- Dadurch, daß die Produkte gemeinsam mit den Stickies in der Flotationsanlage aus dem Altpapierrohstoff entfernt werden, ist ein Einfluß der Produkte selbst auf die Papierqualität nicht möglich.
- Klebende Störstoffe werden nahezu vollständig aus dem Altpapierkreislauf ausgeschieden. Bei Einsatz der Produkte durch eine genügend große Anzahl von Papierfabriken kommt es also nicht, wie derzeit, zu einer Aufkonzentrierung von klebrigen Verunreinigungen im Altpapierrohstoff, sondern zu einer Verringerung dieser Verunreinigungen.
- Alle anderen bisher eingesetzten und nur teilweise funktionierenden Produktgruppen (Fixierung, Inhibierung) können eliminiert werden, sofern diese nicht ebenfalls anderen Zielen dienen.

Nach dem erfindungsgemässen Verfahren wird das hydrophobierte Produkt in vordosierten Säcken bzw. mittels Big Bag und Dosierschnecke dem aufbereiteten Altpapier z.B. im Altpapierpulper zugegeben.

In zwei Testversuchen konnte die sehr stark ausgeprägte Wirkung eines hydrophobierten Minerals in bezug auf die Eliminierung von Mikrostickies in der Flotationsanlage und Inhibierung von Makrostickies deutlichst nachgewiesen werden :

### Beispiel 1 (meßtechnischer Nachweis in bezug auf den Wirkmechanismus):

Zeitungsherstellung mit 80 - 90% deinktem Altpapier
Anlagen-Konstellation: 50% Zeitung, 50% Altpapier;
Chemikalien: Lauge, Peroxid, Wasserglas, modifizierte Fettsäure; Niederkonsistenz-Pulper (4.500 kg Altpapierkapazität);
Voith-Paddelzellen parallel zu Voith-Injektorzellen Versuchsdurchführung:
Dosierort : Altpapierpulper (immer vor den Flotationszellen)
Dosiermenge : 15 kg / Pulper = 0,33 % bezogen auf Altpapiereintrag
Versuchsdauer : ca. 24 h
Messungen in bezug auf Mikrostickies mittels Escher Wyss - Methode: Nach Grobsortierung, nach Vorflotation, nach Nachflotation und im Fertigstoff
Resultate in bezug auf Mikrostickies :
Fläche der Mikrostickies ohne und mit hydrophobiertem Mineral (Ermittlung durch Ausflockung)

| Probenbezeichnung | ohne hyd. Mineral m²/m² | mit hyd. Mineral m²/m² |
|---|---|---|
| nach Grobsortierung | 1.169,49 | 12,85 |
| nach Flotation | 67,33 | 4,71 |
| nach Nachflotation | 15,69 | 0,00 |
| Fertigstoff | 14,79 | 0,00 |

Sowohl im Fertigstoff, als auch bereits nach der Nachflotation waren im Papierbrei keine Mikrostickies mehr nachweisbar.

Nach der Grobsortierung konnten Produktanlagerungen auf Makrostickies mittels Rasterelektronenmikroskopaufnahmen erstmalig dokumentiert werden.

### Beispiel 2 (Beleg für die Effizienz der Mikrostickyeliminierung):

Herstellung von Offsetdruckpapier, Schreib- und Druckpapier, Briefumschlagpapier, Plakatpapiere, chlorfreies Recyclingpapier aus 100 % Altpapier; Altpapiereinsatz zwischen 30 und 100%, meistens zw. 60 und 70%

### Anlagen-Konstellation :

Rohstoff: Druckerei- und Büroabfälle, welche schätzungsweise 0,3 bis 0,4 % an Klebermaterial enthalten;
Chemikalien: Lauge, modifizierte Fettsäure, kein Silikat, kein Peroxid;
Maschinen: Mittelkonsistenz-Pulper (11 bis 13%);
Quellzeit: ca. 40 Minuten; 3-stufige Flotationsanlage mit Injektorzellen von Lamort und Escher Wyss;
Sortierung: 150 µm;
Heißdispergierung.
Versuchsdurchführung:
Dosierort : Altpapierpulper (immer vor den Flotationszellen)
Dosiermenge : 2,3 % eines anorganischen klassischen Sticky-Inhibitors wurden durch 0,4 % des hydrophobierten Minerals ersetzt
Versuchsdauer : 1 Monat
Resultate:
   Das Naßsieb, das erste untere Trockensieb, sowie die Kalanderwalzen der Papiermaschine blieben auch bei zeitweise bewußt hoher Stickiebelastung nahezu ablagerungsfrei. Der Zustand von Naß- und Trockensieb, sowie der Kalanderwalzen ergibt sich naturgemäß aus der Eliminierung von Mikrostickies.

Die fast völlige Abwesenheit von Makrostickies in der Papiermaschine (offensichtlich also wieder agglomerierte Mikrostickies) wird unterstrichen.

Ausgehend von einer Ausfallszeit der Papiermaschine von 20 Std/Monat (außergewöhnlich hoch) konnte zuletzt eine Ausfallszeit von 0,99 Std/Monat (außergewöhnlich niedrig) erzielt werden. Der Durchschnitt der Ausfallzeit lag bisher bei ca. 5 Std/Monat.

## Patentansprüche

1. Verfahren zur Eliminierung, bzw. Inhibierung von klebrigen Verunreinigungen, d.h. sogenannten Stickies, aus dem Papierstoff während des Aufbereitungsprozesses von Altpapier in der Papierindustrie, welcher neben Sortiereinrichtungen nach Größe (Siebtechnik), Form (Siebtechnik) und Dichte (Cleaner, Rohrschleudern, usw.), sowie Dispergier- und andere Einrichtungen auch ein oder mehrstufige Flotationsanlagen umfasst, bei welchen Druckfarbe sowie Schmutzpartikel über den Deinkingschaum ausgeschieden werden sollen, **dadurch gekennzeichnet, dass** im Zuge der Aufbereitung des Altpapiers zur Herstellung eines Papierbreies, der einer Papiermaschine zugeführt wird, vor dem oder beim Einführen des Papierbreies in die Flotationsanlage diesem ein hydrophobiertes synthetisches oder natürliches Mineral zugesetzt wird, welches
derart stark hydrophobiert ist, dass seine Dispergierung in klarem Wasser oder einer klassischen alkalischen oder neutralen faserfreien Deinkingformulierung unmöglich ist,
wobei die Mikrostickies vom zugesetzten hydrophobierten Mineral adsorbiert und von diesem über den Deinkingschaum aus der Flotationsanlage herausgetragen werden.

2. Verfahren nach Anspruch 1, **dadurch gekennzeichnet, dass** das hydrophobierte synthetische oder natürliche Mineral als faserhaltige Aufschlämmung zugeführt wird.

3. Verfahren nach Anspruch 1, **dadurch gekennzeichnet, dass** das hydrophobierte synthetische oder natürliche Mineral in Pulverform zugesetzt wird.

4. Verfahren nach einem der Ansprüche 1 bis 3, **dadurch gekennzeichnet, dass** dem aus der Flotationsanlage kommende Papierbrei hydrophobiertes synthetisches oder natürliches Mineral in Pulverform zur Inhibierung durch Adsorption noch verbliebener Mikro- und Makrostickies zugesetzt wird.

5. Verfahren nach einem der Ansprüche 1 bis 3,
**dadurch gekennzeichnet, dass** dem aus der Flotationsanlage kommende Papierbrei hydrophobiertes synthetisches oder natürliches Mineral in Form einer faserhaltigen Aufschlämmung zur Inhibierung durch Adsorption noch verbliebener Mikro- und Makrostickies zugesetzt wird.

## Claims

1. Process for eliminating and inhibiting, respectively, of adhesive impurities, i.e. so called stickies, from the paper pulp during the process of treating waste paper in paper industries, comprising aside from means for sorting according to size (screen technique), form (screen technique) and density (cleaner, rotary tubes, etc.), as well as means for dispersing and other means, also flotation installations having one or more stages in which printing ink as also dirt particles should be removed via the de-inking froth, **characterized in that** during the treatment of the waste paper for preparing paper pulp which is supplied to a paper making machine, a hydrophobized synthetic or natural mineral is added to the paper pulp prior to or during supplying the paper pulp into the flotation installation, which mineral is so strongly hydrophobized that a dispersion in clear water or a classic alkaline or neutral fiber free de-inking formulation is not possible, the micro-stickies being adsorbed by the added hydrophobized mineral and removed thereby via the de-inking froth from the flotation installation.

2. Process according to claim 1, **characterized in that** the hydrophobized synthetic or natural mineral is added as a fiber free slurry.

3. Process according to claim 1, **characterized in that** the hydrophobized synthetic or natural mineral is added in powder form.

4. Process according to one of the claims 1 to 3, **characterized in that** a hydrophobized synthetic or natural mineral is added in powder form to the paper pulp leaving the flotation installation for inhibiting by adsorption micro and macro stickies which still remained.

5. Process according to one of the claims 1 to 3, **characterized in that** a hydrophobized synthetic or natural mineral is added to the paper pulp leaving the flotation installation as a fiber containing slurry for inhibiting by adsorption micro and macro stickies which still remained.

## Revendications

1. Procédé d'élimination respectivement d'inhibition de contaminants collants, c-à-d. de soi-disant stickies, de la pâte à papier pendant le procédé de traitement de vieux papiers dans l'industrie papetière, comprenant à part des moyens de triage selon la grandeur (tamis), la forme (tamis) et la densité (cleaner, tuyau centrifuge, etc.), ainsi que des moyens de dispersion et autres, aussi des installations de flotation à un ou plusieurs étages, dans lesquels les couleurs d'imprimerie ainsi que des particules contaminants doivent être éliminées au moyen d'une écume de désancrage, **caractérisé en ce que** lors du traitement des vieux papiers pour fabriquer une pâte à papier, qui est alimentée dans une machine à papier, on ajoute avant ou lors de l'alimentation de la pâte à papier dans l'installation de flotation un minéral hydrophobé synthétique ou naturel, lequel minéral est tellement fortement hydrophobé qu'une dispersion n'est plus possible dans l'eau clair ou une formule de désancrage classique alcaline ou neutre sans fibres, les micro-stickies étant adsorbés par le minéral hydrophobé ajouté et étant transportés par celui-ci à l'aide de l'écume de désancrage hors de l'installation de flotation.

2. Procédé selon la revendication 1, **caractérisé en ce que** le minéral hydrophobé synthétique ou naturel est ajouté sous forme d'une suspension contenant des fibres.

3. Procédé selon la revendication 1, **caractérisé en ce que** le minéral hydrophobé synthétique ou naturel est ajouté sous forme de poudre.

4. Procédé selon une des revendications 1 à 3, **caractérisé en ce qu'**on ajoute à la pâte à papier sortant de l'installation de flotation un minéral hydrophobé synthétique ou naturel en forme de poudre pour l'inhibition par adsorption de micro et macro stickies encore restés dans la pâte.

5. Procédé selon une des revendications 1 à 3, **caractérisé en ce qu'**on ajoute à la pâte à papier sortant de l'installation de flotation un minéral hydrophobé synthétique ou naturel sous forme d'une suspension contenant des fibres pour l'inhibition par adsorption de micro et macro stickies encore restant.
